# EUROPÄISCHE PATENTSCHRIFT

(11) **EP 1 332 033 B1**
(45) Veröffentlichungstag und Bekanntmachung des Hinweises auf die Patenterteilung: **09.03.2005**
(21) Anmeldenummer: 01986636.7
(22) Anmeldetag: 28.09.2001
(51) Int. Cl.: B29C 45/56

(54) **VERFAHREN UND VORRICHTUNG ZUM HERSTELLEN VON DICKWANDINGEN FORMTEILEN**
METHOD AND DEVICE FOR PRODUCING THICK-WALLED MOULDED PARTS
PROCEDE ET DISPOSITIF POUR LA PRODUCTION DE PIECES MOULEES A PAROI EPAISSE

(30) Priorität: 02.10.2000 DE 10048861
(43) Veröffentlichungstag der Anmeldung: 06.08.2003
(73) Patentinhaber: Krauss-Maffei Kunststofftechnik GmbH, 80997 München (DE)
(72) Erfinder: KLOTZ, Bernd, 85232 Günding/Bergkirchen (DE)
(74) Vertreter: Zollner, Richard, Dipl.-Phys.
(86) Internationale Anmeldenummer: PCT/EP2001/011262
(87) Internationale Veröffentlichungsnummer: WO 2002/030651

(56) Entgegenhaltungen:
- EP-A- 0 477 967
- WO-A-98/10417
- DE-A- 2 702 412
- DE-A- 19 843 921
- GB-A- 581 197
- US-A- 5 176 859
- US-A- 6 010 656

## Beschreibung

Derartige "dickwandige Formteile" sind beispielsweise Brillengläser, die zum einen aus Glas, andererseits zunehmend auch aus Kunststoff gefertigt werden. Dabei kommen beispielsweise duroplastische Gußmassen (CR39) und Thermoplaste zur Anwendung, wobei je nach Einsatz Polystyrol (PS) , Polymethylmethacrylat (PMMA) oder Polycarbonat (PC) verwendet werden; aufgrund der hohen Schlagfähigkeit wird verstärkt PC eingesetzt.

Bei bekannten Verfahren werden Linsenrohlinge gleichmäßiger Wandstärke (1,5 - 3 mm) in Zykluszeiten von unter 30 s hergestellt, und im Normalfall wird dabei der Standard-Spritzgießprozeß verwendet. Die Kunststoffmasse wird in der Füllphase über kleindimensionierte Kanäle in die Linsenkavität eingebracht. Weil amorphe Kunststoffe in der Abkühlphase eine hohe Dichtereduktion (10 - 20 %) erfahren, wird diese Materialschwindung in einer folgenden Nachdruckphase durch Nachfüttern von plastischer Schmelze vom Spritzkolben der Spritzgießmaschine ausgeglichen.

Bei einem Standard-Spritzprägeprozeß wird im Unterschied zum Standard-Spritzgießprozeß die Kunststoffmasse in einer ersten Füllphase in eine vorvergrößerte Kavität eingebracht, und diese Kunststoffmasse wird folgend mittels einer axialen Werkzeugprägung verprägt. Das Massegewicht, das in der ersten Füllphase in die vorvergrößerte Kavität eingebracht wird, entspricht dabei dem Massegewicht der später entnommenen Teile. Mit der axialen Werkzeugbewegung, diese kann sowohl durch Werkzeugtechnik als auch mit Maschinentechnik eingeleitet werden, wird die vorvergrößerte Kavität verkleinert und die Restfüllung der Kavität wird vorgenommen. Das Standard-Spritzprägeverfahren wird eingesetzt für einfache optische Teile wie Linsen, um Einfallstellen als Folge von Materialschwindung zu vermeiden.

Um bei Linsen mit negativem Brechungsindex (innen dünn, außen dick) Bindenähte zu vermeiden, wird gemäß der EP 0 144 622 und der US 4,540,534 in einer ersten Füllphase die Kunststoffmasse in eine vorvergrößerte Kavitiät eingebracht, bis diese vollständig gefüllt ist. Dann wird folgend eine axiale Werkzeugbewegung eingeleitet, und die vorvergrößerte Kavität wird verkleinert. Eine definierbare Menge Kunststoffmasse wird dabei aus der Kavität verdrängt. Ansonsten entspricht die Vorgehensweise dem Standard-Spritzprägeverfahren.

Eine entsprechende Vorgehensweise wird durch die US-A-4,828,76 vorgeschlagen, wobei hier die Prägephase beginnt, bevor die er ste Einspritzphase abgeschlossen wurde. Auch dieses Verfahren kann für optische. Teile verwendet werden; eine bekannte Anwendung ist die Herstellung von DVD.

Die DE 3414101 A1 offenbart ein Verfahren zum Herstellen von insbesondere dünnwandigen Kunststoff-Formteilen wie beispielsweise Reflektorbauteilen für Signalisier- oder Beleuchtungsvorrichtungen für Kraftfahrzeuge. Hierbei wird über einen in der Spritzachse liegenden, zentralen Angußkanal Kunststoffmaterial in eine Kavität veränderbarer Größe eingespritzt und ausgeformt. Bisher wurde dabei ein vorbestimmtes Volumen an Kunststoffmaterial in eine vorvergrößerte Kavität eingespritzt und durch Zufahren der Form ausgeformt, wobei es Probleme gab, die gewünschte Oberflächengüte zu erzielen. Zur Vermeidung dieser Probleme wird gemäß der DE 3414101 A1 vorgeschlagen, in einer ersten Phase die Kavität konstant zu halten und während dieser Phase zunächst einen Vorformling in der Kavität auszubilden. Durch weiteres Einspritzen von Kunststoffmaterial und gleichzeitiges Vergrößeren der Kavität durch Zurückziehen eines Kolbens wird der Vorformling in axialer Richtung vergrößert. Wenn der Vorformling die gewünschte Größe erreicht hat, wird der Kolben bis auf einen Anschlag vorgefahren und die Kavität auf die Ausgangsgröße verkleinert, wobei der Vorformling in die Breite gedrückt und das Kunststoff-Formteil ausgeformt wird. Zum Herstellen von dickwandigen optischen Linsen ist dieses Verfahren schon deshalb nicht geeignet, weil durch den in der Spritzachse liegenden Angußkanal Markierungen in der Mitte der Linse auftreten würden. Ausserdem kann die Kavität zu keinem Zeitpunkt kleiner gemacht werden als die Größe des Kunststoff-Formteils selbst.

Ein weiteres Verfahren zur Herstellung von optischen Linsen ist aus der gattungsbildenden GB-A-581197 bekannt. Der Formhohlraum für eine Linse wird von federkraftbeaufschlagten Formeinsätzen gebildet. In diesen Formhohlraum wird Kunststoffschmelze eingespritzt und der Formhohlraum mit zunehmender Füllung gegen die Kraft der Ferdern vergrößert, bis durch Anschläge die gewünschte Linsendicke erreicht worden ist. Ob der ursprüngliche Formhohlraum zunächst weitgehend gefüllt und eine erste dünne Linse mit einer guten Oberflächenqualität erzeugt wird, oder ob er nur teilweise gefüllt und ein beträchtlicher Anteil der Linsenoberfläche erst zu einem späteren Zeitpunkt ausgeformt wird, hängt von der Federkonstanten ab.

Obwohl die oben erwähnten Verfahren befriedigende Ergebnisse bei der Herstellung dünnwandinger Kunststoff-Formteile, beispielsweise dünner Linsen, liefern, ergeben sich erhebliche Probleme bei der Ausbildung von dickwandingen Formteilungen bzw. Linsen.

So können Einfallstellen aufgrund von Materialschwindung auf treten, es können sich Oberflächenmarkierungen ergeben, weil die Kunststoffmasse nicht in einem optimalen Quellfluß in die Kavität einfließen kann. Es können sich kalte Randschichten in der Füllphase verschieben. Durch Erhöhung der Werkzeugtemperatur bis nahe der Glastemperatur (TG = ca. 140°C bei PC) wird die Entstehung von kalten Randschichten unterdrückt. Daraus ergibt sich eine verlängerte Zykluszeit.

Um einen nahezu optimalen Quellfluß sicherzustellen, werden große Teilanschnitte benötigt, die anschließend staubfrei abge schnitten werden müssen und in der Regel nicht mehr für die Herstellung von optischen Teilen verwendet werden können und als Abfall entsorgt werden.

Um eine gute Abformung der Werkzeugkavitätenoberfläche zu erzielen, muß eine hohe Werkzeugtemperatur für die Füllphase gewählt werden. Diese liegt nahe der Glastemperatur des Kunststoffes, so daß damit ein hoher Energieverbrauch verbunden ist.

Der Erfindung liegt somit die Aufgabe zugrunde, ein Verfahren zum Herstellen von dickwandingen Kunststoff-Formteilen, insbesondere optischen Linsen, anzugeben, das sich durch eine wirtschaftliche und einfache Verfahrensführung auszeichnet und mit dem Kunststoff-Formteile mit optimaler Oberflächenbeschaffenheit herstellbar sind.

Diese Aufgabe wird durch. ein Verfahren gemäß Anspruch 1 gelöst; die abhängigen Ansprüche betreffen Weiterentwicklungen der Erfindung. Eine Vorrichtung zur Durchführung des Verfahrens ist in Patentanspruch 6 angegeben.

Das erfindungsgemäße Verfahren macht sich die Erkenntnis zunutze, daß die Herstellung von relativ dünnwandingen Kunststoff-Formteilen mit guter Oberflächenbeschaffenheit relativ unproblematisch erfolgen kann. Dementsprechend wird diese Erkenntnis auf dickwandige Formteile umgesetzt, und das erfindungsgemäße Verfahren gliedert sich in zwei Phasen. In der ersten Phase wird ein relativ dünnes Teil mit optimaler Oberflächenqualität erzeugt, und in einer zweiten Phase wird das Kunststoff-Formteil auf eine Endwandstärke durch Zufuhr von Kunststoffmaterial "aufgeblasen".

Nach der ersten Phase oder auch nach der zweiten Phase kann eine Kompressionsphase durchgeführt werden, um Materialschwindung und somit Einfallstellen zu vermeiden.

Zum Vergrößern der Kavität in der zweiten Phase wird erfindungsgemäß ein Prägestempel eingesetzt, der linear verschieblich ist und einen Teil der Kavität definiert. Dabei ist vorzugsweise der Prägestempel im Bereich seines Formendes, parallel zu seinem Verschiebeweg von der Wandung eines Formwerkzeugs durch eingespritztes Kunststoffmaterial isoliert. Es ist deshalb nicht erforderlich, das Formwerkzeug in dieser Phase auf einer erhöhten Temperatur zu halten.

Andererseits können jedoch Abkühleffekte in der Kavität nicht vollständig vermieden werden, so daß bei Verwendung eines schneckenwegabhängigen oder schließwegabhängigen Schließkraftprofils der resultierende Innendruck abnehmen würde. Dementsprechend wird erfindungsgemäß vorgeschlagen, ein innendruckgeregeltes Schließkraftprofil zu verwenden.

Bei der erfindungsgemäßen Vorrichtung ist zumindest das kavitätseitige Ende des Prägestempels von einem Hohlraum umgeben, der mit der Kavität kommuniziert und in den eingespritztes Kunststoffmaterial eindringt. Dieser Hohlraum erstreckt sich zumindest über den Hub des verschiebbaren Prägestempels, so daß der Prägestempel von dem Werkzeug zumindest in dem Bereich durch eingedrungenes Kunststoffmaterial isoliert wird.

Ausführungsformen der Erfindung werden anhand der beigefügten Zeichnungen erläutert. Es zeigen:
- Fig. 1: eine schematische Darstellung im Querschnitt der Formvorrichtung,
- Fig. 2A, 2B: entsprechende Querschnittsdarstellungen wie die Fig. 1, wobei das Formwerkzeug in zwei verschiedenen Positionen ist,
- Fig. 3: ein Prozeßablaufdiagramm.

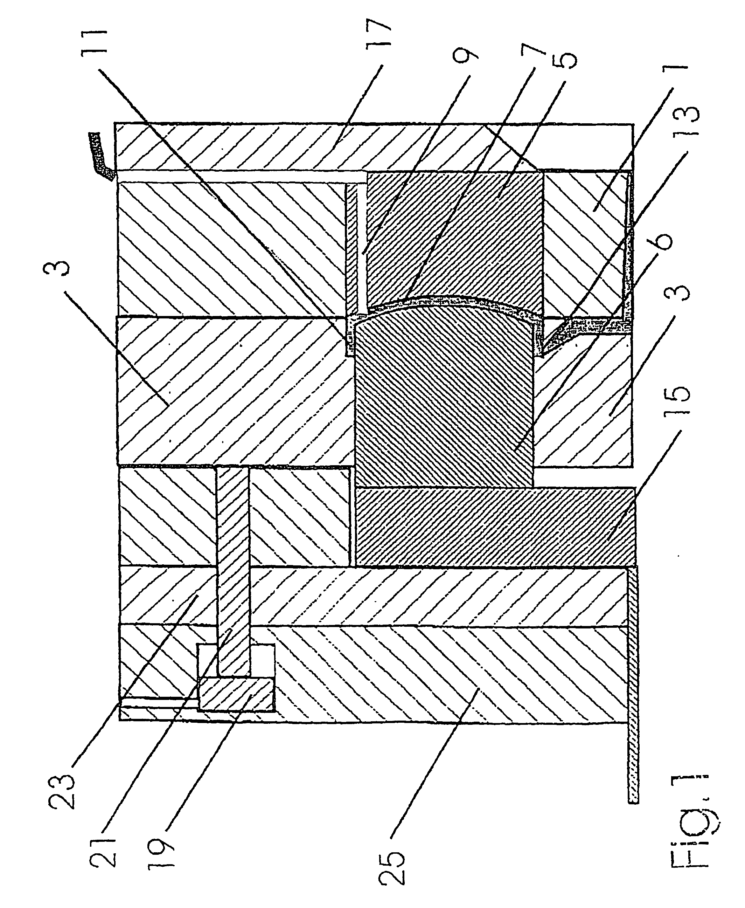

Gemäß Fig. 1 umfaßt die Vorrichtung zur Durchführung des erfindungsgemäßen Verfahrens eine erste Formplatte 1, in die ein Linseneinsatz 5 eingesetzt ist. Die erste Formplatte 1 stützt sich an einer Stützplatte 17 ab. Eine zweite Formplatte 3 wirkt mit der ersten Formplatte 1 zusammen und trägt einen Prägestempel 6, der in Axialrichtung (vertikal Richtung der Fig. 1) über eine Antriebsplatte 15 bewegbar ist. Der Linseneinsatz 5, die zweite Formplatte 3 und der Prägestempel 6 bilden eine Kavität 7, die über einen Anguß 13 mit flüssigem Kunststoffmaterial beschickt werden kann. Dabei dringt insbesondere auch Kunststoffmaterial in den seitlichen Bereich 11 zwischen der Formplatte 3 und dem Prägestempel 6 ein und isoliert das entsprechende Ende des Prägestempels 6 vom temperierten Werkzeug. Das Material in diesem Bereich bildet also gewissermaßen einen "Isolierrand".

Während des Füllens der Kavität wird die Formplatte 3 durch eine Hydraulikvorrichtung 21, 19 an der Formplatte 1 vorgehalten, um während des Befüllens ein Öffnen der Form zu verhindern.

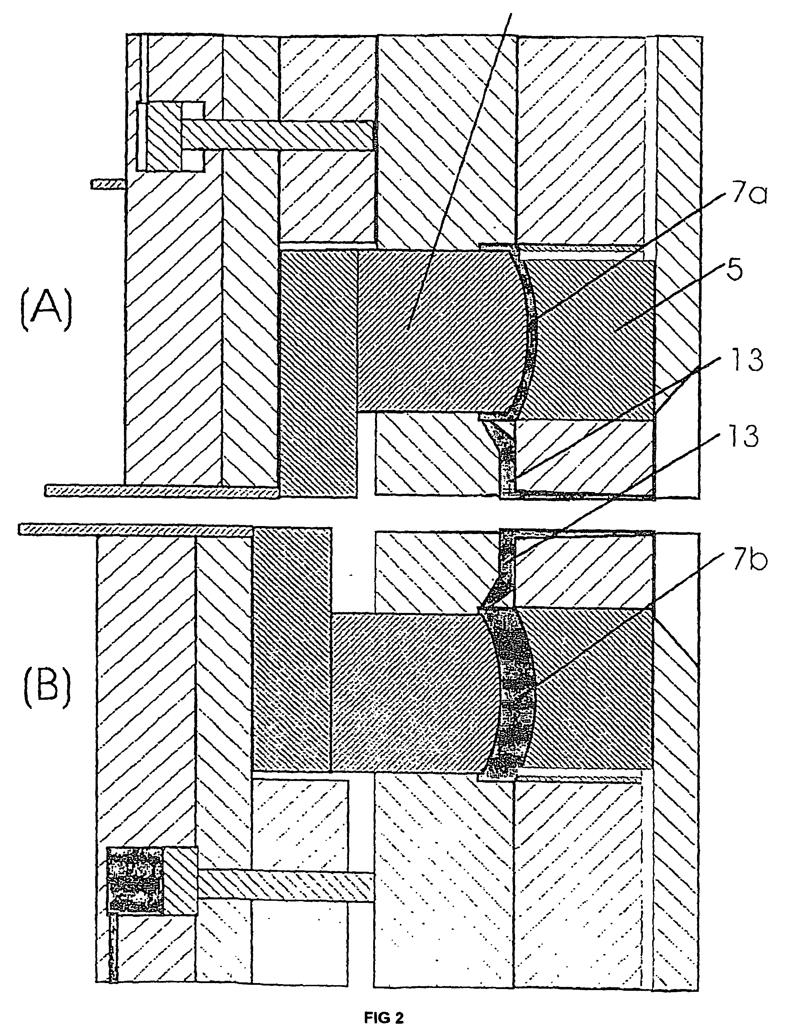

Figur 2 zeigt eine der Figur 1 entsprechenden Darstellung in zwei unterschiedlichen Positionen des Prägestempels. In der Stellung A ist der Prägestempel so eingestellt, daß eine mini-male Kavität 7a vorhanden ist, und die Stellung B zeigt das Werkzeug mit maximaler Kavität 7b.

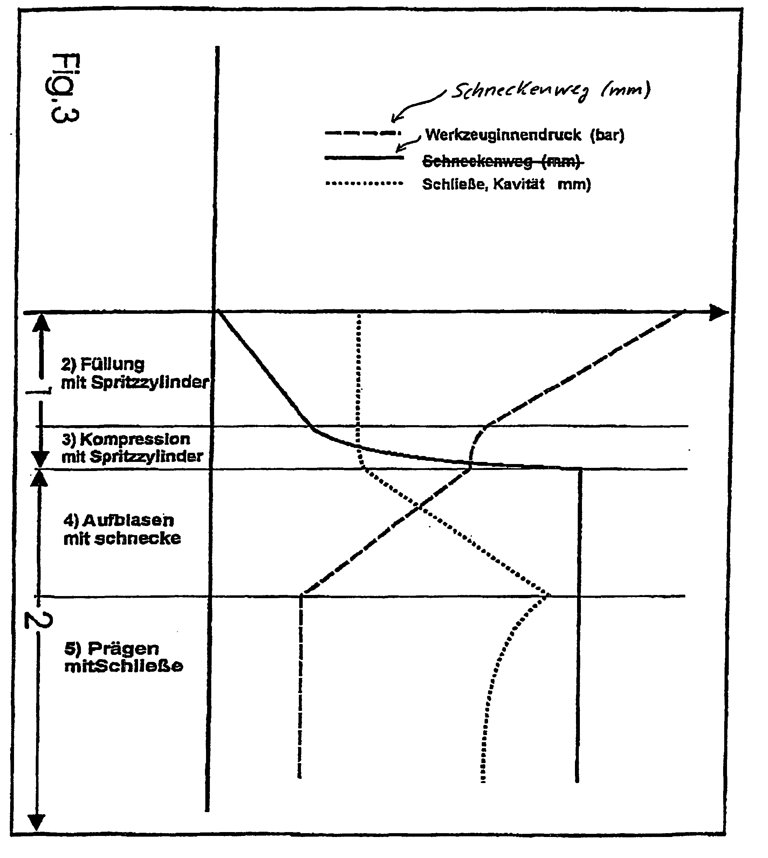

Zur Erläuterung des Prozeßablaufs wird auf die Fig. 3 Bezug genommen. Zunächst wird das Werkzeug vollständig geschlossen, und in die minimale Kavität 7a wird plastisches Kunststoffmaterial durch einen Spritzzylinder oder die Schnecke einer Spritzgießmaschine eingebracht, bis die minimale Kavität vollständig gefüllt ist. Daran schließt sich eine kurze Kompressionsphase an (optional), um die Oberfläche bei hohem Forminnendruck optimal abzuformen.

Anschließend wird die Kunststoffmasse von Spritzzylinder der Spritzgießmaschine bis zum Erreichen einer definierten Teilwandstärke "aufgeblasen", und zwar optional schneckenwegabhängig oder schließenwegabhängig. Daran schließt sich eine Prägephase an, in der zur Vermeidung von Einfallstellen infolge von Materialschwindung eine Massenkompression durchgeführt wird. Nach dem Ausformen des Kunststoff-Formteils kann die form geöffnet und das Kunststoff-Formteil entnommen werden, woran sich ein weiterer Zyklus anschließt.

Durch den erfindungsgemäßen "Isolierrand" wird der Prägestempel vom temperierten Werkzeug isoliert, so daß er lange Zeit axial beweglich sein kann. Die Dicke des Isolierrandes ist abhängig von der Teildicke und der daraus resultierenden Zykluszeit (oft 6 Min. und länger). Ohne Isolierrand oder zu dünnem Isolierrand wird der Prägestempel durch die sich bildende kalte Randschicht am Linsenaußenrand gebremst und wäre dann nicht mehr axial prägefähig. Die Folge wären Einfallstellen infolge Materialschwindung.

Um weiterhin Einfallstellen zu vermeiden, ist es wichtig, daß der Innendruck der Kavität möglichst konstant ist. Aus diesem Grund ist vorzugsweise ein Innendruckgeber 9 vorhanden (vgl. Fig. 1) , so daß der Prozeß innendruckabhängig geregelt werden kann.

Bei dem erfindungsgemäßen Verfahren ergeben sich diverse Vorteile im Vergleich mit dem Stand der Technik. So gibt es wegen der abschließenden Prägephase im Ablaufschritt (5) keine Materialschwindung und somit ergeben sich keine Einfallstellen.

Durch die abschließende Prägephase (5) vermeidet der Prägestempel vollflächig die Bildung von Einfallstellen und bringt vollflächig Innendruck auf die Linse. Es reicht somit aus, eine Linse mit wenig Innendruck und deshalb mit wenig eingefrorenen Spannungen herzustellen.

Die üblichen Werkzeugtemperaturen bei dünnen Linsen (2 - 3 mm) in PC liegen bei 80°C. Die bei dicken Linsen (13 mm) liegen bei ca. 120°C. Diese hohe Temperatur wird benötigt, damit die resultierenden Fehler wie "Verschieben von kalten Randschichten" und fehlende Oberflächenbrillanz zu vermeiden. Die Werkzeugtemperatur muß deshalb während der füllphase so nahe wie möglich bei der Glastemperatur liegen. Es ergibt sich eine lange Zykluszeit von oft mehr als 6 Minuten.

Anders bei dem neuen Verfahren. Hier bildet sich bereits in der. Füllphase ein Innendruck in der Kavität infolge des Füllwiderstandes. Bereits mit Werkzeugtemperaturen von ca. 80°C (bei PC) erfolgt kein Verschieben von kalten Randschichten und es ergibt sich eine optimale Oberflächenausprägung und damit eine hohe Oberflächenbrillanz. Eine Reduktion der Zykluszeit um bis zu 50 % ist erreichbar.

Wegen der dünnen Wandstärken der vorverkleinerten Kavität bildet sich auch bei niederviskosen Kunststoffen ein optimaler Quellfluß. Es ist deshalb möglich, kleine Anschnitte (Punktanschnitt, Tunnelanschnitt) zu verwenden. Der Kaltkanal kann deshalb nach der Teilentformung (Punktanschnitt) leicht von der Linse getrennt werden. Am Beispiel Tunnelanschnitt ist auch eine automatische Trennung des Kaltkanals bei der Werkzeugöffnung möglich.

Weil auf den Schwindungsausgleich durch den Spritzzylinder der Spritzgießmaschine vollständig verzichtet werden kann und weil die Ablaufschritte bis zum abschließenden Prägen innerhalb kurzer Zeit (7 Sekunden) abgeschlossen sind, können kleine Kaltkanalquerschnitte verwendet werden. Üblich ist eine Kaltkanaldikke, die gleich der Dicke der vorverkleinerten Kavität ist. Die Linsendicke wird im Ablaufschritt (4) , d. h. dem Aufblasen der dünnen Linse, hergestellt. Die resultierende Linsendicke ergibt sich durch die Menge des eingespritzten Kunststoffs. Es ist also nicht erforderlich, Einsätze im Werkzeug zu wechseln, um Teilwandstärken zu ändern, so daß in einem Werkzeug eine Vielzahl von Linsendicken hergestellt werden kann.

## Patentansprüche

1. Verfahren zum Herstellen dickwandiger Kunststoff-Formteile, insbesondere dickwandiger optischer Linsen, durch Einspritzen von Kunststoffmaterial in eine Form mit veränderbarer Kavität, wobei die Form (1, 3, 5) geschlossen und eine erste minimale Kavität (7a) eingestellt wird, die kleiner ist als das dickwandige Kunststoff-Formteil, wobei Kunststoffmaterial seitlich in die minimale Kavität (7a) eingespritzt wird und wobei bei fortgesetztem Einspritzen die Kavität vergrößert wird,
**dadurch gekennzeichnet,**
**dass** in einer ersten Phase die Größe der minimalen Kavität (7a) während des Füllvorgangs konstant gehalten und mit Kunststoffmaterial vollständig gefüllt wird, so dass ein relativ dünnes Kunststoff-Formteil erzeugt wird, und dass in einer zweiten Phase das dünne Kunststoff-Formteil durch fortgesetztes, seitliches Einspritzen aufgeblasen wird.

2. Verfahren nach Anspruch 1,
**dadurch gekennzeichnet,**
**dass** zwischen der ersten Phase und der zweiten Phase eine Kompressionsphase durchgeführt wird.

3. Verfahren nach Anspruch 1 oder 2,
**dadurch gekennzeichnet,**
**dass** nach der zweiten Phase eine Kompressionsphase durchgeführt wird.

4. Verfahren nach einem der Ansprüche 1 bis 3,
**dadurch gekennzeichnet,**
**dass** man die Größe der Kavität mit einem linear verschiebbaren Prägestempel (6) ändert, wobei ein Ende des Prägestempels (6) die Dicke der Kavität definiert, wobei man mindestens entlang des Hubs des Prägestempels (6) dieses Ende seitlich durch eingespritztes Kunststoffmaterial thermisch gegen eine Formhälfte (3) isoliert.

5. Verfahren nach einem der Ansprüche 1 bis 4,
**dadurch gekennzeichnet,**
**dass** man den Innendruck in der Kavität ermittelt und ein innendruckgeregeltes Formschließkraftprofil verwendet.

6. Vorrichtung zur Durchführung des Verfahrens nach einem der Ansprüche 1 bis 5, mit einer ersten Formplatte (1) und einer zweiten Formplatte (2) und einem linear in einer der Formplatten über einen einstellbaren Hub verschiebbaren Prägestempel (6), die zusammen eine veränderbare Kavität (7) definieren, wobei in einer ersten Stellung des Prägestempels die Kavität (7a) eine Minimalgröße aufweist,
**dadurch gekennzeichnet,**
**dass** in mindestens einer der Formplatten eine Ausnehmung (11) vorhanden ist, die ein Ende des Prägestempels (6) umgibt, sich mindestens entlang des Hubes des Prägestempels (6) parallel zu dessen Verschiebeweg erstreckt und in Kommunikation mit der Kavität (7) steht.

## Claims

1. Method for producing thick-walled plastics material moulded parts, in particular thick-walled optical lenses, by injecting plastics material into a mould having a variable cavity, the mould (1, 3, 5) being closed and a first minimal cavity (7a), which is smaller than the thick-walled plastics material moulded part, being adjusted, plastics material being injected laterally into the minimal cavity (7a) and the cavity being enlarged on continued injection, **characterised in that**, in a first phase, the size of the minimal cavity (7a) is kept constant during the filling process and the minimal cavity (7a) is filled completely, so that a relatively thin plastics material moulded part is produced, and **in that**, in a second phase, the thin plastics material moulded part is inflated by means of continued, lateral injection.

2. Method according to claim 1, **characterised in that** a compression phase is carried out between the first phase and the second phase.

3. Method according to either claim 1 or claim 2, **characterised in that** a compression phase is carried out after the second phase.

4. Method according to any one of claims 1 to 3, **characterised in that** the size of the cavity is varied using a linearly displaceable embossing punch (6), one end of the embossing punch (6) defining the thickness of the cavity, this end being laterally thermally insulated, by means of injected plastics material, against one half of the mould (3), at least along the lift of the embossing punch (6).

5. Method according to any one of claims 1 to 4, **characterised in that** the internal pressure in the cavity is determined and an internal pressure-controlled, mould-clamping force profile used.

6. Device for carrying out the method according to any one of claims 1 to 5, comprising a first mould plate (1), a second mould plate (2) and an embossing punch (6) which is linearly displaceable in one of the mould plates over an adjustable lift, which together define a variable cavity (7), the cavity (7a) having a minimal size in a first position of the embossing punch, **characterised in that** there is a recess (11), which surrounds one end of the embossing punch (6), extends parallel to the displacement path of the embossing punch (6), at least along the lift thereof, and is in communication with the cavity (7), in at least one of the mould plates.

## Revendications

1. Procédé pour fabriquer des pièces moulées en plastique à parois épaisses, plus particulièrement des lentilles optiques à parois épaisses, par l'injection de matière plastique dans un moule avec une cavité modulable, sachant que le moule (1, 3, 5) est fermé et qu'une première cavité minimale (7a) est ajustée, laquelle est de taille inférieure à celle de la pièce moulée en plastique à parois épaisses, moyennant quoi la matière plastique est injectée latéralement dans la cavité minimale (7a) et de telle manière que la cavité est agrandie lors de l'injection en continu, **caractérisé en ce que**, dans une première phase, la taille de la cavité minimale (7a) est maintenue constante pendant le remplissage et la cavité minimale (7a) est remplie entièrement, de sorte qu'une pièce moulée en plastique relativement mince est produite, et **en ce que**, dans une seconde phase, la pièce moulee en plastique mince est gonflée par injection latérale en continu.

2. Procédé selon la revendication 1, **caractérisé en ce qu'** une phase de compression a lieu entre la première phase et la seconde phase.

3. Procédé selon la revendication 1 ou 2, **caractérisé en ce qu'**une phase de compression a lieu après la seconde phase.

4. Procédé selon une des revendications 1 à 3, **caractérisé en ce que** la taille de la cavité peut être modifiée avec un outillage de frappe (6) pouvant être déplacé de façon linéaire, sachant qu'une extrémité de l'outillage de frappe (6) définit l'épaisseur de la cavité, moyennant quoi il est possible d'isoler thermiquement, au moins le long du levier de l'outillage de frappe (6), cette extrémité latéralement par une matière plastique injectée par rapport à un demi-moule (3).

5. Procédé selon une des revendications 1 à 4, **caractérisé en ce que** la pression interne dans la cavité est déterminée et **en ce qu'**un profil de force de fermeture du moule réglé par la pression interne est utilisé.

6. Dispositif pour exécuter le procédé selon une des revendications 1 à 5, avec une première plaque-modèle (1) et une seconde plaque-modèle (2) et un outillage de frappe (6) pouvant être déplacé de façon linéaire dans une des plaques-modèles sur un levier réglable, qui forment ensemble une cavité modulable (7), moyennant quoi, dans une première position de l'outillage de frappe, la cavité (7a) comporte une taille minimale, **caractérisé en ce que**, dans au moins une des plaques-modèles, il existe un évidement (11) qui entoure une extrémité de l'outillage de frappe (6), qui s'étend au moins le long du levier de l'outillage de frappe (6) de façon parallèle à son déplacement et entre en contact avec la cavité (7).
